# EUROPEAN PATENT APPLICATION

(11) **EP 2 211 285 A1**
(43) Date of publication of application: **28.07.2010**
(21) Application number: 09150967.9
(22) Date of filing: 20.01.2009
(51) Int. Cl.: G06F 21/00

(54) **Secured data processing device**

(71) Applicant: Nagravision SA, 1033 Cheseaux-sur-Lausanne (CH)
(72) Inventor: Bellochio, Marc, 1081, Montpreveyres (CH); Gremaud, Fabien, 1618, Châtel-St-Denis (CH)
(74) Representative: Leman Consulting S.A.

(57) **Abstract**

The present invention provides for a secured data processing device comprising a processing unit, an instruction memory to hold instructions, a plurality of addressable modules in a memory address space and an address monitor, at least one of said instructions comprising at least an operation code, said memory address space being divided into regions, said plurality of addressable modules being connected to a databus, said secured data processing device being **characterised in that**:
- said operation code comprises information indicating that said instruction is exclusively applicable to at least one of said regions in the memory address space;
- said secured data processing device comprises information defining a range of valid addresses for each of said regions;
- said secured data processing device comprises means to enable access only to the at least one region in the memory address space to which said instruction is exclusively applicable.

## Description

### INTRODUCTION

The present invention relates to the domain of security in computing, particularly in relation to preventing unauthorised access to memory in a data processing system.

### BACKGROUND OF THE INVENTION

A data processing system may include hardware resources such as a processing unit, an address monitor, memory and a plurality of addressable modules. The data processing system may operate under the control of an operating system and may perform routines according to one or several software resources or applications. During the execution of an application, the data required by said application or the data which is produced by the application may be stored in the memory.

In some cases, the data processing system may treat sensitive information which, if discovered by a malicious third party, could be used to jeopardise the system. The sensitive information is generally stored in a memory or a part of a memory to which access is restricted. For example, in a microprocessor unit (MPU), part of a ROM in which sensitive data is stored may be mapped to memory locations 0x00 to 0xFF, and the MPU may be configured so as not to give user access to the ROM. Computer hackers have developed various ways to circumvent such restrictions. For example, in the above case of the protected ROM, using a beam of high energy particles, a hacker could perform what is known as a "glitch attack" whereby he attempts to glitch one or more of the connections giving access to the ROM while the MPU is accessing a non-restricted part of the memory. In this way he may manage to configure the connections to allow access the restricted part of the memory, whereas the MPU believes it is accessing a non-restricted part of the memory. In this manner the hacker may even succeed in getting the MPU to dump at least part of the contents of the restricted part of the memory.

It is the purpose of the current invention to add a level of security to prevent the fraudulent access to sensitive information in a data processing system's memory.

### SUMMARY OF THE INVENTION

The present invention offers a solution to the problems outlined above by providing for a secured data processing device comprising a processing unit, an instruction memory to hold instructions, a plurality of addressable modules in a memory address space and an address monitor, at least one of said instructions comprising at least an operation code, said memory address space being divided into regions, said plurality of addressable modules being connected to a databus, said secured data processing device being **characterised in that**:
- said operation code comprises information indicating that said instruction is exclusively applicable to at least one of said regions in the memory address space;
- said secured data processing device comprises information defining a range of valid addresses for each of said regions;
- said secured data processing device comprises means to enable access only to the at least one region in the memory address space to which said instruction is exclusively applicable.

### BRIEF DESCRIPTION OF THE DRAWINGS

The present invention and its advantages will be better understood thanks to the enclosed detailed description of a particular embodiment and to the enclosed drawings, in which:
FIG.1 shows a register transfer diagram showing the effect that a "load" instruction could have on two registers;
FIG.2 shows a register transfer diagram showing the effect that a "load" instruction according to the current invention would have on two registers.
FIG.3 shows a schematic representation of the current invention.

### DETAILED DESCRIPTION OF A PREFERRED EMBODIMENT

In order to circumvent the problems mentioned above whereby a hacker gains access to a restricted area of memory in a data processing system using techniques such as "glitch attacks", the current invention provides a novel design using an extended operation code and an enhanced address monitoring system to precluded or otherwise flag operations which violate a predefined protocol defining legal accesses to memory locations.

According to a preferred embodiment of the current invention, the total memory address space in a data processing system is divided into several different regions, for example four different regions. The range of each region and the access rights attributed to each region are programmed either in hardware or in software. By access rights it is meant the allowable types of access (read, write, execute etc.) attributed to a process which executes instructions in order to legally address said region. Each of the addressable modules (e.g. RAMs, ROMs, registers) are assigned, either in a hard-wired fashion or in a programmable manner, to reside in one of the regions.

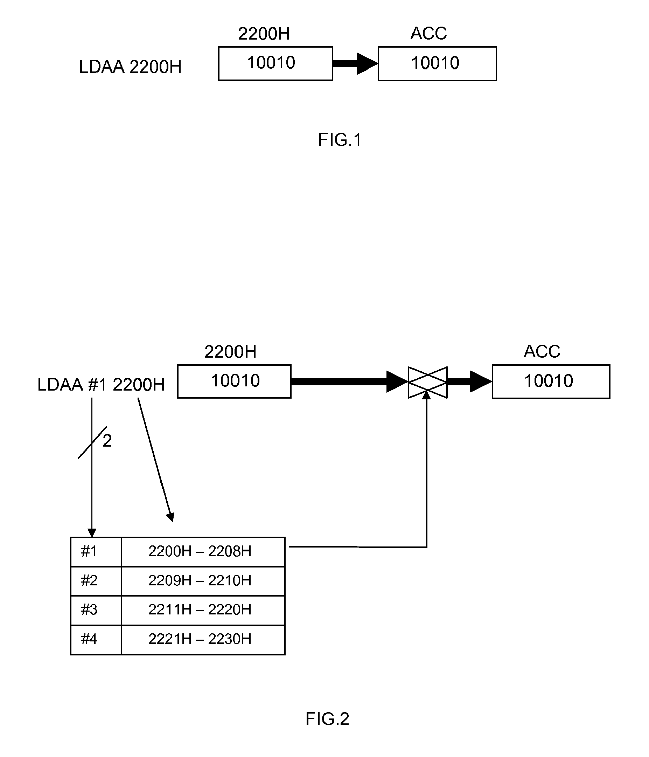

An enhanced processing unit is designed to interpret instructions from an enhanced instruction set. The instruction set is enhanced in that it comprises a set of operation codes which have been extended to include an additional field. The purpose of the additional field is to specify a region of the memory address space to which the instruction applies. A different operation code will therefore be required for the same instruction depending on which region or regions of the memory address space the instruction is applicable. The additional field employed in the extended operation code applies to any instructions which involve LOAD or STORE type operations, which by definition include at least a target address operand. During the execution of this type of instruction, the target address appears on a databus. FIG.1 shows a register transfer diagram illustrating the effect on two registers in a processing unit upon the execution of a LOAD type operation, where data from a memory location, or target address, is to be loaded into the processing unit's accumulator. FIG.2 shows the same instruction applicable the current invention with its extended operation code set, wherein an extra field is provided in order to specify the particular region of the memory address space which will be involved in the operation. In the extended operation code set any instructions involving LOAD or STORE type operations are further qualified in this manner with a region specification.

In an embodiment of the current invention, the data processing system comprises a CPU, an instruction memory, an address monitor connected to a databus and a plurality of addressable modules connected to the databus. The CPU is designed to interpret instructions from an enhanced instruction set wherein instructions of type LOAD and STORE have been enhanced to comprise information specifying a region of the memory address space to which the instruction is intended to apply. The address monitor holds a table of information defining the relationship between the extended operation codes and the different regions of the memory address space. For example for each of the designated regions the address monitor will hold that region's start address, its end address and the access rights to the addresses in that region. The CPU receives instructions from the instruction memory. Whenever a LOAD or STORE type instruction is encountered, the CPU informs the address monitor as to which address and which region the current operation code is applicable. Thanks to the table defining the relationship between the extended operation codes and the different regions of the memory address space, the address monitor can determine which region is involved in the instruction and which access rights are attributed to that region. The address monitor allows access to the region based on the access rights to that region and puts the address on the databus. Since only the region addressed by the instruction is accessible, if the system is subjected to a "glitch attack" wherein an address from a new region appears on the databus, there is no access to that new region. Furthermore, the address monitor could flag an error if the type of access to the address does not match the access rights for that address or if the address is outwith the permitted range of addresses defined by the operation code.

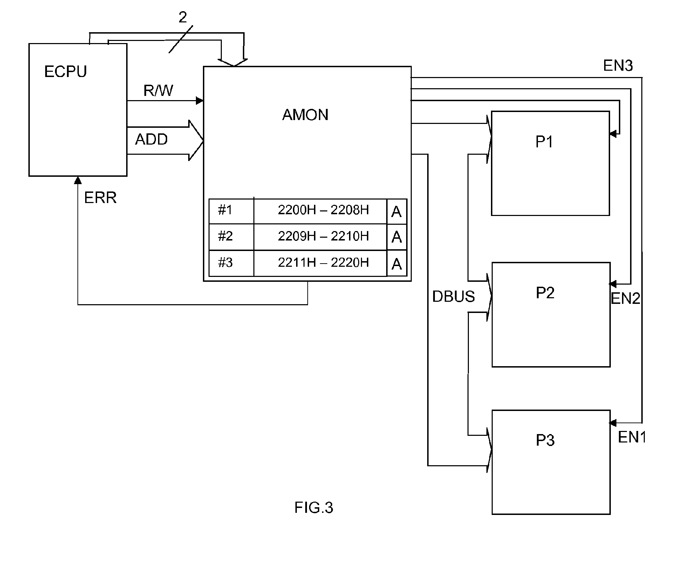

FIG.3 illustrates an embodiment of the current invention. The instruction set in this example has been enhanced to allow for an extra field of two bits in the operation code to designate one of up to four valid address ranges to which an instruction is valid. The processing unit (ECPU) decodes the instructions that it receives from an instruction memory (not shown). In the case that a LOAD or STORE type instruction is encountered, the processing unit passes the address or addresses (ADD) involved in the instruction to the address monitor (AMON). Furthermore, the extra two-bit field of the operation code is decoded in order to determine the region or regions of the memory address space to which the instruction is applicable. This decode may be done in the processing unit or in the address monitor. The address monitor is preprogrammed with the valid address ranges for each region and the access rights to each region (A). The author of the instruction will have verified that the operation code used is the correct one for the intended target address i.e. that the intended target address does indeed fall within the region indicated by the operation code used. The address monitor drives the databus with the address, or addresses, involved in the instruction and enables the addressable module, or modules (P1, P2, P3), in the region or regions corresponding to the extra field of the operation code. The address monitor can also flag an error to the CPU if there is a mismatch between the region specified by the operation code and the region addressed by the instruction. The address ranges corresponding to each of the regions can be preprogrammed in the address monitor either by hardware or by software.

In another embodiment of the present invention, it may be required that the above-described protected or enforced LOAD or STORE type instructions be applicable only to a subset of regions from the total number of regions defined in the memory address space, with a more conventional type of LOAD or STORE instruction, i.e. non-protected or non-enforced, being applicable to the remaining region(s). In this case the address monitor comprises additional information allowing for an extended definition of the access rights attributed to each of the regions. This extended definition allows for a region to be designated as requiring to adhere to the above-described protected or enforced LOAD or STORE type instructions or rather to adhere to a standard, non-protected or non-enforced LOAD or STORE policy.

In a further embodiment of the present invention, provision is made for the case where an instruction encountered in an application requires that access be made to a location outwith the current region. This is possible when said instruction is of type CALL or JUMP. Following a CALL or JUMP type of instruction, the following instruction requiring to be fetched from the instruction memory may be located in a region outwith the current region. In order to protect that FETCH in the same way as LOAD and STORE type instructions are protected, a "call gate" concept is used. In this case, entry to the point indicated by the CALL or JUMP is made via a so-called call gate. The call gate comprises the permissions of the new region referenced by the CALL or JUMP thereby allowing for the following FETCH to be correctly protected. The dual of a call gate is a return gate. The return gate is used to exit from the region indicated by the CALL or JUMP, restore the original permissions and return to the original region.

## Claims

1. Secured data processing device comprising a processing unit, an instruction memory to hold instructions, a plurality of addressable modules in a memory address space and an address monitor, at least one of said instructions comprising at least an operation code, said memory address space being divided into regions, said plurality of addressable modules being connected to a databus, said secured data processing device being **characterised in that**:
- said operation code comprises a region specification indicating that said instruction is exclusively applicable to at least one of said regions in the memory address space;
- said secured data processing device comprises a table of information defining a range of valid addresses for each of said regions;
- said secured data processing device comprises means to enable access only to the at least one region in the memory address space to which said instruction is exclusively applicable said at least one region defined in the table of information as referenced by the region specification;

2. Secured data processing device of claim 1, **characterised in that** said secured data processing system denies access to addresses which fall outwith said at least one region.

3. Secured data processing device of either of claims 1 or 2, **characterised in that** an error is flagged when an attempt is made to execute an instruction requesting access to an address which falls outwith said at least one region.

4. Secured data processing device of any of claims 1 to 3, **characterised in that** said secured data processing device further comprises information indicating the access rights required by an entity in order to access said regions.

5. Secured data processing device of any of claims 1 to 4, **characterised in that** an error is flagged when an attempt is made by a process to access a region or regions to which said process does not obtain the necessary access rights.

6. Secured data processing device of any of claims 1 to 5 **characterised in that** the definition of the range of addresses to which said instruction is exclusively applicable is configurable by software.

7. Secured data processing device of any of claims 1 to 5 **characterised in that** the definition of the range of addresses to which said instruction is exclusively applicable is configurable by hardware.

8. Secured data processing device of any of claims 1 to 7 **characterised in that** the definition of the access rights required by an entity in order to access said regions is configurable by software.

9. Secured data processing device of any of claims 1 to 7 **characterised in that** the definition of the access rights required by an entity in order to access said regions is configurable by hardware.
